# FASCICULE DE BREVET EUROPEEN

(11) **EP 2 736 710 B1**
(45) Date de publication et mention de la délivrance du brevet: **16.09.2015**
(21) Numéro de dépôt: 12750412.4
(22) Date de dépôt: 16.07.2012
(51) Int. Cl.: B32B 5/02, B32B 5/18, B32B 5/24, B32B 5/26, B32B 7/14, B32B 17/02, B32B 17/10, D04H 1/42, E04B 1/84, E04B 1/86, E04F 13/00, E04F 13/08, G10K 11/168, G10K 11/162

(54) **REVÊTEMENT MURAL ABSORBANT ACOUSTIQUE RENFERMANT UNE COUCHE DE FIBRES MULTILOBEES**
SCHALLDÄMMENDE WANDVERKLEIDUNG ENTHALTEND EINE SCHICHT MIT MULTILOBALFASERN
ACOUSTIC ABSORBENT WALL COATING COMPRISING A LAYER OF MULTILOBAL FIBERS

(30) Priorité: 28.07.2011 FR 1156904
(43) Date de publication de la demande: 04.06.2014
(73) Titulaire: Saint-Gobain Adfors, 73000 Chambéry (FR)
(72) Inventeur: BLANCHARD, Benjamin, F-95150 Taverny (FR); NIKAJ, Erisela, F-75018 Paris (FR); CHUDA, Katarzyna, 92600 Asnières-sur-Seine (FR); BERGER, Sylvain, F-75018 Paris (FR)
(74) Mandataire: Pöpping, Barbara
(86) Numéro de dépôt international: PCT/FR2012/051686
(87) Numéro de publication internationale: WO 2013/014364

(56) Documents cités:
- WO-A1-2006/066601
- DE-A1-102010 050 336
- US-A- 4 283 457

## Description

La présente invention concerne un revêtement mural multi-couches à peindre comprenant un textile de verre collé sur un non tissé à base de fibres à section multilobée, et qui, même à l'état peint, présente un pouvoir d'absorption acoustique important. Elle concerne également un procédé de fabrication d'un tel revêtement et son utilisation pour améliorer le confort acoustique d'une pièce ou d'un bâtiment.

La notion de « confort acoustique », comme l'idée de confort en général, est une notion assez subjective. On s'accord toutefois généralement à définir un bon confort acoustique par une bonne intelligibilité des sons tels que les voix humaines ou la musique, un temps de réverbération ni trop court pour éviter l'impression de sons étouffés, ni trop long pour éviter un écho résiduel trop marqué, et l'absence de sons à puissance sonore excessive. La qualité du confort acoustique est principalement gouvernée par l'atténuation des sons au moyen de matériaux absorbants acoustiques, fixés par exemple aux murs et/ou au sol.

Il est important de distinguer le confort acoustique de l'isolation acoustique. Lorsqu'un son rencontre un obstacle, tel qu'une paroi d'un bâtiment, une partie de l'énergie sonore incidente est réfléchie, une autre est absorbée et une troisième est transmise par l'obstacle. L'isolation acoustique a pour but de réduire la transmission du son, alors que l'objectif de l'amélioration du confort acoustique est la réduction et l'optimisation de la composante réfléchie du son.

Les deux paramètres les plus utilisés pour évaluer la qualité de confort acoustique sont le temps de réverbération et le coefficient d'absorption acoustique, également appelé indice alpha Sabine (α_{w}). Ce dernier est défini comme le rapport de l'énergie acoustique absorbée par un matériau donné à l'énergie acoustique incidente (Eₐ/Eᵢ). L'indice alpha Sabine est déterminé par des mesures en champ diffus réalisées selon la norme NF EN ISO 354 (Mesurage de l'absorption acoustique en salle réverbérante) et est calculé conformément à la norme NF EN ISO 11654 (Absorbants pour l'utilisation dans les bâtiments - Evaluation de l'absorption acoustique).

A partir du coefficient d'absorption acoustique obtenu en champ diffus, on définit différentes classes de performance, décrites dans la norme NF EN ISO 11654.

De manière générale, un matériau ou revêtement absorbant acoustique présentant une nature chimique et une structure poreuse ou fibreuse donnée absorbe d'autant plus efficacement le son qu'il est épais, autrement dit, son indice α_{w} augmente avec l'épaisseur. Pour des raisons faciles à comprendre, il n'est toutefois pas souhaitable de commercialiser des revêtements muraux présentant une épaisseur excessive. Ils nécessiteraient des capacités de stockage et de transport importantes et leur pose par des particuliers serait difficile. Une épaisseur excessive, par exemple au-delà d'environ 1 cm, poserait également des problèmes esthétiques en particulier dans le domaine de l'habitat des particuliers.

Un autre problème des revêtements muraux absorbants acoustiques est leur aspect de surface. Les meilleures propriétés d'absorption acoustique sont généralement obtenues avec des revêtements ayant une couche de surface poreuse, très perméable à l'air et donc au son. De telles couches de surface poreuses ne sont toutefois pas toujours satisfaisantes d'un point de vue esthétique, en particulier elles ne sont généralement pas destinées à être peintes, et lorsqu'elles peuvent être recouvertes d'une couche de peinture, leur pouvoir d'absorption acoustique diminue drastiquement.

La présente invention a pour but de proposer un revêtement mural à peindre présentant, même à l'état peint, un coefficient d'absorption acoustique permettant sa classification en tant que revêtement absorbant acoustique selon la norme NF EN ISO 11654, au moins dans la classe E (α_{w} = 0,15 à 0,25), voire même dans la classe D (α_{w} = 0,30 à 0,55), et dont l'épaisseur, avant peinture, ne dépasse pas 6 mm. Le revêtement mural de la présente invention doit ainsi allier de bonnes propriétés d'absorption acoustique et un aspect esthétique satisfaisant, le plus proche possible des revêtements muraux à peindre commercialisés, tels que les revêtements à base de toile en fibres de verre.

Un certain nombre de documents décrivent des revêtements muraux multi-couches isolants acoustiques.

Ainsi, la demande CH 650 196 décrit un revêtement mural multi-couches comprenant un support de mousse à porosité ouverte renfermant des charges et des composants ignifugeants, et une couche de surface textile, par exemple en polyester. Entre les deux couches est insérée une feuille d'aluminium perforée, destinée à améliorer la résistance au feu du revêtement.

La demande FR 2 672 908 décrit un revêtement mural multi-couches dans lequel une couche de tissu est collée au moyen d'un film continu thermocollant sur un support en mousse, lequel support en mousse est à son tour collé au moyen d'un deuxième film continu thermocollant sur une sous-couche.

De façon similaire, FR 0 061 369 divulgue un revêtement mural dans lequel un textile en polymère synthétique est collé au moyen d'un film continu thermocollant en polyéthylène sur une nappe de mousse à porosité ouverte.

EP 0 271 681 divulgue un revêtement mural absorbant acoustique dans lequel une couche de papier ou de tissu perméable à l'air est collée sur une structure d'écartement, par exemple un textile, du carton perforé ou une grille de matière plastique. La structure d'écartement couverte de tissu est à son tour collée sur une structure poreuse absorbante acoustique.

Le brevet US 5 681 408 décrit un revêtement mural multicouches absorbant acoustique où deux textiles relativement lâches sont collés l'un contre l'autre au moyen d'un film en polyéthylène.

Le brevet US 4 283 457 décrit un revêtement mural absorbant acoustique dans lequel un feutre aiguilleté en fibres de verre est collé au moyen d'une colle réactive sur une mousse de polyuréthanne à porosité ouverte. Le matériau est décrit comme présentant de bonnes propriétés d'absorption acoustique, mais ces propriétés sont obtenues sur un revêtement très épais, présentant une épaisseur comprise entre un et deux centimètres, et à l'état non peint. Le feutre aiguilleté en fibres de verre formant la couche de surface de ce revêtement ne se prête pas ou très mal à l'application d'une peinture acrylique ou glycérophtalique.

Aucun de ces documents ne divulgue un revêtement à base de textile de verre présentant, même à faible épaisseur et à l'état peint, un coefficient d'absorption acoustique (α_{w}) supérieur ou égal à 0,2 permettant un classement en tant qu'absorbant acoustique selon la norme NF EN ISO 11654.

La Demanderesse, après de nombreux essais d'absorption acoustique en champ diffus sur des revêtements muraux peints ou non peints, à base d'un textile de verre collé sur un support non-tissé, a réussi à dégager les trois tendances suivantes :

Le textile de verre qui sera en contact avec la peinture ou avec l'atmosphère de la pièce doit avoir une perméabilité à l'air comprise dans une certaine gamme. La perméabilité à l'air doit être suffisante pour que le son puisse pénétrer dans la couche de mousse sous-jacente, mais ne doit pas excéder une valeur au-delà de laquelle le matériau aurait un aspect insatisfaisant à l'état peint.

Le support non-tissé doit être constitué majoritairement de fibres à section multi-lobée. La section multi-lobée des fibres augmente en effet, à masse volumique identique, l'aire de l'interface entre les parois des fibres et l'air et c'est au niveau de cette interface que le son ayant traversé le textile de verre est absorbé. Plus l'étendue de cette interface accessible au son est importante, meilleur sera le coefficient d'absorption acoustique du produit multi-couches final.

La couche adhésive fixant le textile de verre sur le support non-tissé ne doit pas boucher tous les pores superficiels du support, autrement dit elle doit laisser libres des zones microscopiques où le son ayant traversé la couche de surface puisse pénétrer dans le non-tissé pour y être absorbé. La quantité de colle doit toutefois être suffisante pour permettre une bonne fixation du textile de verre au support non-tissé, faute de quoi le coefficient d'absorption acoustique diminue indésirablement.

La Demanderesse a ainsi constaté qu'en optimisant les trois paramètres ci-dessus (perméabilité à l'air du textile de verre en surface, structure de la couche adhésive et structure multi-lobée des fibres du support non tissé) il était possible d'obtenir des revêtements muraux de faible épaisseur présentant, à l'état peint, un indice α_{w}, déterminé selon NF EN ISO 354 et NF EN ISO 11654, supérieur ou égal à 0,25.

La présente invention a par conséquent pour objet une structure multi-couches, présentant une épaisseur globale comprise entre 3,5 et 6 mm, comprenant
(a) une couche de support formée par un non-tissé à base de fibres organiques à section transversale multilobée,
(b) une couche de surface formée par un textile de verre, présentant une résistance statique au passage de l'air, mesurée selon la norme ISO 9053, comprise entre 10⁵ N.s.m⁻⁴ et 10⁶ N.s.m⁻⁴, de préférence entre 5.10⁵ N.s.m⁻⁴ et 8,5.10⁵ N.s.m⁻⁴, en particulier entre 7.10⁵ N.s.m⁻⁴ et 8.10⁵ N.s.m⁻⁴,
(c) à l'interface entre la couche de support (a) et la couche de surface (b), une couche adhésive discontinue présentant une masse surfacique comprise entre 17 et 60 g/m², de préférence entre 20 et 40 g/m², en particulier entre 21 et 30 g/m², et idéalement entre 22 et 27 g/m².

Dans la présente invention, les trois couches (a), (b) et (c) sont contigües les unes aux autres, autrement dit la couche adhésive (c) fixe la couche de surface (b) directement à la couche de support non tissée (a), sans qu'aucune autre couche (par exemple feuille d'aluminium, couche de renfort ou couche d'écartement) ne soit présente entre la couche (a) et la couche (b).

Les valeurs de résistance statique au passage de l'air ci-dessus sont celles mesurées pour le textile de verre à l'état non peint et, bien entendu, avant collage sur la couche de support non tissée.

Le support non tissé formant la couche (a) a pour particularité d'être constitué, au moins majoritairement, de préférence d'au moins 80 % en poids, de fibres à section transversale multilobée, appelées ci-après également fibres multilobées. Ces fibres sont des fibres organiques constituées au moins en partie d'un ou plusieurs polymères thermoplastiques, généralement synthétiques.

On peut citer à titre d'exemples de polymères synthétiques formant les fibres multilobées de la couche (a) les polyoléfines telles que le polypropylène et le polyéthylène, les polyamides homopolymères ou copolymères tels que les nylons 6/6, 6/9, 6/10, 6/12, 10, 11 et 12, les polyimides, les polyesters tels que les poly(alkylène téréphtalate) et poly(alkylène naphtalate), les poly(acide lactique), les polyhydroxyalkanoates, le poly(alcool vinylique), les copolymères d'éthylène et d'alcool vinylique (EVA), les polyacrylates, les polycaprolactones, les copolymères d'éthylène et d'acide acrylique, le poly(acide acrylique), le polystyrène, le poly(tétrafluoroéthylène), les polyuréthannes, ou des combinaisons de ceux-ci.

Les fibres multilobées utilisées dans la présente invention peuvent en outre contenir une certaine fraction, de préférence moins de 30 %, de matières non thermoplastiques, comme par exemple la viscose, la rayonne, le lyocell, le coton, la pulpe de bois, ou même des fibres de verre.

Les fibres multilobées peuvent être formées de deux phases ou plus de deux phases distinctes, par exemple d'une phase centrale (âme) sur laquelle sont fixés les lobes, ces lobes pouvant être formés de différents matériaux polymères.

Il peut s'agir notamment de fibres préparées par voie sol-gel ou de fibres hybrides verre-polymère obtenues par voie fondue, par exemple par extrusion.

Les fibres organiques à section multi-lobée formant la couche de support (a) peuvent être des fibres mono-filament ou des fibres multi-filaments constituées de plusieurs monofilaments. Elles peuvent être continues ou discontinues et présentent de préférence une masse linéique moyenne comprise entre 1 et 25 dtex, en particulier entre 3 et 15 dtex, et idéalement entre 5 et 12 dtex. La longueur des fibres est avantageusement comprise entre 0,5 et 15 cm, de préférence entre 1 et 10 cm et en particulier entre 2 et 8 cm.

Les fibres multilobées sont de préférence des fibres à section trilobée, tétralobée ou pentalobée.

La forme des lobes n'est pas particulièrement limitée. Elle peut être arrondie ou présenter des arrêtes. Les lobes peuvent avoir des formes complexes, par exemple des formes en T ou Y, ou chaque lobe peut présenter plusieurs ramifications.

Il est connu de définir pour des fibres multi-lobées un rapport de modification qui correspond au rapport du diamètre (R) du cercle circonscrit de la section des fibres au rapport du diamètre (r) du cercle inscrit. Ce rapport R/r est de préférence compris entre 2 et 7, en particulier entre 3 et 6.

La couche de support (a) formée de fibres multi-lobées peut être obtenue en principe par toute technique de fabrication de textiles non-tissés, par exemple par aiguilletage ou filage directe (*spunbonding*).

Elle présente de préférence une masse surfacique comprise entre 200 et 800 g/m², plus préférentiellement entre 250 et 500 g/m² et en particulier entre 300 et 400 g/m².

Des fibres multi-lobées utilisables dans la présente invention et leur procédé de fabrication sont connus et décrits par exemple dans US 2006/0012072, US 6 815 383, WO03/105982, EP 0 595 157, EP 0 860 521, EP 0 201 812 et EP 2 272 999.

Comme déjà expliqué en introduction, il est essentiel dans la présente invention que la couche adhésive, au niveau de l'interface entre les couches (a) et (b), ne soit pas une couche continue, formée par exemple par insertion d'un film adhésif, comme par exemple dans FR 2 672 908, US 5 681 408 ou FR 0 061 369.

La couche adhésive (c) doit coller fermement le textile de verre (b) au support (a), tout en laissant ouverts un maximum de pores situés à l'interface entre les couches (a) et (b). Il est malheureusement très difficile, voire impossible, de quantifier précisément la proportion de pores superficiels fermés ou ouverts dans le produit fini.

Afin d'arriver à des résultats acoustiques satisfaisants, il est nécessaire de respecter certaines quantités d'application par unité de surface et de ne pas déposer l'adhésif sous forme de film ou de couche continus. L'adhésif doit être déposé de manière à couvrir de façon assez homogène, à l'échelle macroscopique, toute l'étendue de l'interface, mais on veillera à ce qu'à l'échelle microscopique seules certaines zones soient couvertes d'adhésif et d'autres restent vides. Une telle application « discontinue » peut se faire par exemple en utilisant un adhésif thermofusible (*hot melt adhesive*) sous forme de voile ou de grille solide à température ambiante que l'on insère entre le support en mousse et le tissu de verre avant de soumettre l'ensemble à un chauffage sous pression à une température supérieure à la température de ramollissement ou de fusion de l'adhésif. On peut également envisager l'application de l'adhésif sous forme d'une poudre d'adhésif thermofusible sur le support non-tissé (a) ou sur le textile de verre (b), puis application de la deuxième couche (b) ou (a) et chauffage sous pression.

La nature chimique de l'adhésif thermofusible n'est pas déterminante pour la présente invention et on pourra utiliser les adhésifs thermofusibles classiques à base de polyuréthannes, de copolyamide (coPA) ou de copolymères de PET (coPET), comme par exemple le produit Texiron 9D8 fourni par la société Protechnic.

Enfin, l'adhésif n'est pas forcément un adhésif thermofusible mais peut être une composition liquide d'un adhésif réactif ou thermodurcissable que l'on applique par exemple par impression sur l'un des deux composants à coller en veillant à ce que la composition adhésive ne forme pas un film ou une couche continue.

L'application en mode « discontinu » décrit ci-dessus ne donnera toutefois de bons résultats acoustiques que si l'on respecte également les quantités d'application spécifiées ci-avant, comprises entre 17 et 60 g/m², de préférence entre 20 et 40 g/m², en particulier entre 21 et 30 g/m², et idéalement entre 22 et 27 g/m². En effet, si les quantités d'adhésif appliquées sont significativement supérieures à 60 g/m² de surface, l'adhésif thermofusible risque de s'étaler au moment de la fusion jusqu'à former une couche continue bouchant les pores en surface de la mousse de support, ce qu'il faut absolument éviter. A l'inverse, si les quantités appliquées sont significativement inférieures à 17 g/m², la force d'adhésion au niveau de l'interface mousse/textile de verre risque d'être insuffisante et la Demanderesse a constaté que le produit fini présente alors des coefficients d'absorption considérablement moins bons, de l'ordre de 0,1 à 0,15.

Lorsque la couche adhésive (c) est formée par un adhésif thermofusible, le point de ramollissement de celui-ci est de préférence inférieur d'au moins 10 °C, en particulier d'au moins 15 °C et idéalement d'au moins 20 °C au point de ramollissement du polymère thermoplastique formant les fibres multi-lobées de la couche de support (a). Il faut en effet éviter que la structure de cette couche de support se modifie défavorablement sous l'influence de la chaleur et de la pression de contre-collage.

Lorsqu'on respecte l'ensemble des indications ci-dessus concernant le mode et les quantités d'application, la couche adhésive (c), dans le produit fini, est constituée d'un réseau de points et/ou de lignes s'étendant de façon homogène sur toute l'interface entre les couches (a) et (b). L'adjectif « homogène » a ici le sens de régulier à l'échelle macroscopique, et englobe à la fois des motifs ordonnés et aléatoires à l'échelle microscopique.

Le textile de verre formant la couche de surface (b) peut être une toile de verre (c'est-à-dire un tissé constitué de fils de chaîne et de trame) ou un voile (c'est-à-dire un non-tissé). On peut également envisager une combinaison de ceux-ci, par exemple un non-tissé renforcé par une structure tissée. La présente invention n'englobe toutefois pas les textiles de verre tels que des feutres de verre à structure très lâche obtenus par aiguilletage. De tels textiles, lorsqu'ils ont une tenue mécanique satisfaisante, présentent en effet une épaisseur trop importante et, surtout, ne se prêtent généralement pas à l'application d'une peinture.

Le textile de verre est de préférence une toile de verre, c'est-à-dire un tissu obtenu à partir de fils de verre composés d'une multitude de filaments de verre (ou fils de base) ou dérivés de ces fils, notamment les assemblages de ces fils de base en stratifils (« roving » en anglais).

La toile ou le voile de verre peuvent éventuellement contenir une fraction relativement limitée, généralement inférieure à 20 % en poids, de préférence inférieure à 10 % en poids, de fibres constituées d'une matière organique. Ces autres fibres peuvent être des fibres naturelles telles que les fibres de soie, de laine, de bois, de cellulose, de coton ; des fibres synthétiques ou artificielles telles que les fibres de viscose ou de rayonne, de polyéthylène, de polypropylène, de poly(éthylène téréphtalate), de polystyrène, de poly(méthacrylate de méthyle), de polyamide, de poly(chlorure de vinyle), de polyacrylonitrile, de poly(acétate de vinyle, de poly(alcool de vinyle), de polyester, de poly(tétrafluoroéthylène) et d'aramide ; des fibres métalliques par exemple des fibres d'argent, de cuivre ou d'acier ; des fibres de carbone ; des fibres minérales, par exemple de basalte, de silice, d'alumine ou de céramique.

Le verre entrant dans la constitution des fils peut être de tout type, par exemple de type E, C, R ou AR (résistant aux alcalis). On préfère en particulier le verre E.

Le diamètre des filaments de verre constituants les fils peut varier dans une large gamme allant par exemple de 5 à 30 µm. La masse linéique des filaments peut être comprise entre 30 et 1500 tex.

Avantageusement, la toile de verre comprend, en chaîne, un fil de verre retordu (fil textile) et, en trame, un fil de verre sans torsion ayant subi un traitement visant à séparer les filaments de verre de manière à leur conférer du volume (fils « voluminisé »). La masse linéique des fils de chaîne et de trame varie de préférence de 50 à 500 tex.

De manière classique, la toile ou le voile à peindre sont enduits d'une composition d'apprêt qui maintient les fils et leur confère la rigidité qui convient pour que la pose sur le support final puisse être effectuée convenablement.

Les textiles de verre utilisés dans la présente invention sont connus dans la technique et disponibles sur le marché, par exemple sous la dénomination Novelio de la société Adfors. Ils présentent de préférence une masse surfacique comprise entre 80 et 450 g/m², en particulier entre 100 et 300 g/m² et encore plus préférentiellement entre 150 et 250 g/m².

La structure multi-couches de la présente invention peut comporter, en plus des trois couches (a), (b) et (c) décrites ci-dessus, une quatrième couche, appelée ci-après sous-couche (d), de préférence perméable à la vapeur d'eau et collée sur la face de la couche de support (a) opposée à celle en contact avec la couche de surface (b).

Cette couche peut être par exemple un film en matière plastique, une feuille de papier, un film métallique perforé, un tissu, un non tissé ou une combinaison de ceux-ci.

Cette couche est principalement destinée à faciliter l'encollage de la structure multicouche avant application sur les parois de la pièce dont il s'agit d'améliorer le confort acoustique. Cette sous-couche (d) peut bien entendu être pré-encollée.

Enfin, la structure multi-couches de la présente invention peut comporter une cinquième couche, appelée ci-après surcouche (e), formée par une couche de peinture appliquée sur la couche de surface (b).

Cette peinture peut être appliquée avant collage de la structure au mur, ou bien la structure multi-couches peut être peinte seulement après collage au mur.

La sur-couche de peinture (e) peut-être n'importe quelle peinture utilisée couramment pour la décoration de pièces d'habitation. Il peut s'agir de peintures acryliques à base aqueuse ou de peintures glycérophtaliques. La couche de peinture finale peut être microporeuse ou non. Elle est appliquée généralement avec un grammage inférieur à 600 g/m², de préférence à raison de 50 à 500 g/m², et en particulier à raison de 100 à 350 m²/g.

Comme expliqué en introduction, le choix des matériaux des différentes couches a permis d'obtenir des revêtements muraux présentant, à l'état peint, des coefficients d'absorption du son suffisants pour permettre leur classement en tant que revêtement absorbant acoustique selon la norme NF EN ISO 11654 (classes D ou E). Ce classement peut être obtenu pour de faibles épaisseurs. Les structures multicouches de la présente invention ont par conséquent une épaisseur globale comprise entre 3,5 et 6 mm, de préférence entre 4,0 et 5,5 mm.

Les structures multi-couches de la présente invention peuvent être fabriquées selon des procédés de contre-collage très similaires à des procédés connus et sur des installations existantes utilisées communément pour la fabrication des revêtements muraux.

Dans un tel procédé de fabrication, qui constitue également un objet de la présente invention, on superpose, dans l'ordre, un non-tissé en fibres multi-lobées, un voile d'adhésif thermofusible et un textile de verre, puis on soumet la structure ainsi formée, comportant au moins trois couches, à une température au moins égale au point de ramollissement de l'adhésif thermofusible, de préférence en appliquant une pression, par exemple par calandrage.

Une alternative possible à l'utilisation d'un voile thermofusible est l'application d'une composition adhésive en poudre ou liquide sur l'une des faces du non tissé en fibres multi-lobées ou du textile de verre. L'application peut se faire selon un motif ordonné (grille, réseau de points équidistants), par exemple par impression, ou bien selon un motif aléatoire, par exemple par application d'une poudre ou pulvérisation d'une composition adhésive liquide. Après application de la composition adhésive, le non-tissé en fibres multi-lobées est mis en contact avec le textile de verre, de préférence sous pression et chauffage, de manière à coller le textile de verre fermement sur le non-tissé en fibres multi-lobées.

Enfin, la présente invention a pour objet l'utilisation d'une structure multicouches telle que décrite ci-dessus pour l'amélioration du confort acoustique d'une pièce ou d'un bâtiment. Le procédé d'amélioration du confort acoustique comprend l'application d'une structure multicouches selon l'invention, de préférence par collage, sur une ou plusieurs parois internes de la dite pièce ou dudit bâtiment, en particulier sur les murs.

### Exemple

Un molleton en fibres multilobées Deep Groove (4-DG^{®}, 6 dpf x 1,5" en PET) fournies par la société FIT Fiber est réalisé par aiguilletage en une épaisseur de 4,5 mm et une masse surfacique de 300 g/m².

Pour comparaison, on réalise un non-tissé à base de fibres non multi-lobées à base de viscose/polypropylène (rapport pondéral 90/10) présentant une masse linéique de 3,3 dtex. Ce non-tissé comparatif a une masse surfacique identique à celui à base de fibres Deep Groove, à savoir égale à 300 g/m² et une épaisseur de 4,4 mm.

Une toile à peindre en fibres de verre présentant une masse surfacique de 220 g/m² et une résistivité statique au passage de l'air de 7,7.10⁵ N.s.m⁻⁴ est contre-collée sur chacun des molletons. Ce contre-collage se fait au moyen d'un voile d'adhésif thermofusible constitué de fibres bicomposants avec une âme en poly(éthylène téréphtalate) (PET) et une enveloppe en copolymère coPET, cette enveloppe ayant un point de ramollissement inférieur à celui de la partie centrale en homopolymère PET. Le voile d'adhésif thermofusible présente une masse surfacique de 25 g/m². Les trois couches sont superposées les unes aux autres et l'ensemble est collé par chauffage à une température d'environ 90 °C sous une pression de calandrage d'environ 0,5 bars. La structure à trois couches obtenue a une épaisseur totale de 5 mm. Elle est ensuite collée sur des plaques de plâtre BA13 à l'aide d'une colle vinylique (Ovalit Ultra, de la société Henkel) et peinte avec une peinture acrylique satinée (150 g/m²). Une surface de 10,80 m² est ainsi utilisée pour les essais en chambre réverbérante (NF EN ISO 354).

Le coefficient d'absorption acoustique, calculé selon NF EN ISO 11654, est de 0,25 pour l'exemple selon l'invention utilisant une couche de support à base de fibres multi-lobées et de 0,15 seulement pour le revêtement comparatif utilisant un non-tissé à base de fibres de viscose/polypropylène non multi-lobées.

## Revendications

1. Structure multicouches, présentant une épaisseur globale comprise entre 3,5 et 6 mm, comprenant
(a) une couche de support formée par un non-tissé à base de fibres organiques à section transversale multilobée,
(b) une couche de surface formée par un textile de verre, présentant une résistance statique au passage de l'air, mesurée selon la norme ISO 9053, comprise entre 10⁵ N.s.m⁻⁴ et 10⁶ N.s.m⁻⁴, de préférence entre 5.10⁵ N.s.m⁻⁴ et 8,5.10⁵ N.s.m⁻⁴, en particulier entre 7.10⁵ N.s.m⁻⁴ et 8.10⁵ N.s.m⁻⁴,
(c) à l'interface entre la couche de support (a) et la couche de surface (b), une couche adhésive discontinue présentant une masse surfacique comprise entre 17 et 60 g/m², de préférence entre 20 et 40 g/m², en particulier entre 21 et 30 g/m², et idéalement entre 22 et 27 g/m².

2. Structure multicouches selon la revendication 1, **caractérisée par le fait que** la couche de support présente une masse surfacique comprise entre 200 et 800 g/m², de préférence entre 250 et 500 g/m² et en particulier entre 300 et 400 g/m².

3. Structure multicouches selon la revendication 1 ou 2, **caractérisée par le fait que** les fibres organiques à section multi-lobée présentent une masse linéique moyenne comprise entre 1 et 25 dtex, de préférence entre 3 et 15 dtex, en particulier entre 5 et 12 dtex.

4. Structure multi-couches selon l'une des revendications précédentes, **caractérisée par le fait que** les fibres à section multi-lobée comprennent au moins un polymère organique thermoplastique synthétique.

5. Structure multi-couches selon l'une des revendications précédentes, **caractérisée par le fait que** les fibres à section multi-lobée sont des fibres à section trilobée, tétralobée ou pentalobée.

6. Structure multi-couches selon l'une des revendications précédentes, **caractérisée par le fait que** les fibres à section multi-lobée présentent un rapport de modification (R/r) compris entre 2 et 7, de préférence entre 3 et 6.

7. Structure multi-couches selon l'une quelconque des revendications précédentes, **caractérisée par le fait que** la couche adhésive (c) comprend un adhésif thermofusible ayant un point de ramollissement inférieur d'au moins 10 °C, de préférence d'au moins 15 °C et idéalement d'au moins 20 °C au point de ramollissement du polymère formant la couche de support (a).

8. Structure multi-couches selon l'une quelconque des revendications précédentes, **caractérisée par le fait que** la couche adhésive (c) est constituée d'un réseau de points et/ou de lignes s'étendant de façon homogène sur toute l'interface entre les couches (a) et (b).

9. Structure multi-couches selon l'une quelconque des revendications précédentes, **caractérisée par le fait que** la couche de surface (b) est une toile de verre ou un non-tissé de fibres de verre.

10. Structure multi-couches selon l'une quelconque des revendications précédentes, **caractérisée par le fait que** la couche de surface (b) présente une masse surfacique comprise entre 80 et 450 g/m², de préférence entre 100 et 300 g/m² et en particulier entre 150 et 250 g/m².

11. Structure multi-couches selon l'une quelconque des revendications précédentes, **caractérisée par le fait qu'**elle comporte en outre une sous-couche (d), de préférence perméable à la vapeur d'eau, collée sur la face de la couche de support (a) opposée à celle en contact avec la couche de surface (b).

12. Structure multi-couches selon l'une quelconque des revendications précédentes, **caractérisée par le fait qu'**elle comprend en outre une sur-couche de peinture (e) appliquée sur la couche de surface (b).

13. Structure multi-couches selon l'une quelconque des revendications précédentes, **caractérisée par le fait qu'**elle a une épaisseur globale comprise entre 4,0 et 5,5 mm.

14. Procédé d'amélioration du confort acoustique d'une pièce ou d'un bâtiment, comprenant l'application d'une structure selon l'une quelconque des revendications précédentes, de préférence par collage, sur une ou plusieurs parois internes de la dite pièce ou dudit bâtiment.

15. Procédé de fabrication d'une structure multi-couches selon l'une quelconque des revendications 1 à 13, **caractérisé par le fait qu'**il comprend la superposition d'un non-tissé de fibres organiques à section multilobée, d'un voile d'adhésif thermofusible et d'un textile de verre, puis le chauffage de la structure comportant au moins trois couches ainsi formée à une température au moins égale au point de ramollissement de l'adhésif thermofusible.

16. Procédé de fabrication d'une structure multi-couches selon l'une quelconque des revendications 1 à 13, **caractérisé par le fait qu'**il comprend l'application d'une composition adhésive selon un motif ordonné ou aléatoire, sur un non-tissé de fibres organiques à section multilobée et/ou sur un textile de verre, la mise en contact du non-tissé de fibres de polymère organique avec le textile de verre, de manière à coller le textile de verre sur la structure en mousse de polymère organique.

## Patentansprüche

1. Mehrschichtige Struktur, die eine Gesamtdicke zwischen 3,5 und 6 mm aufweist und Folgendes umfasst:
(a) eine Trägerschicht, die von einem Vlies auf der Basis von organischen Fasern mit mehrlappigem Querschnitt gebildet ist,
(b) eine Oberflächenschicht, die von einem Glasgewebe gebildet ist, das einen statischen Luftdurchlasswiderstand aufweist, der, nach der Norm ISO 9053 gemessen, zwischen 10⁵ N.s.m⁻⁴ und 10⁶ N.s.m⁻⁴, vorzugsweise zwischen 5.10⁵ N.s.m⁻⁴ und 8,5.10⁵ N.s.m⁻⁴, insbesondere zwischen 7.10⁵ N.s.m⁻⁴ und 8.10⁵ N.s.m⁻⁴ beträgt,
(c) an der Schnittstelle zwischen der Trägerschicht (a) und der Oberflächenschicht (b) eine unterbrochene Haftschicht, die eine Masse pro Fläche zwischen 17 und 60 g/m², vorzugsweise zwischen 20 und 40 g/m², insbesondere zwischen 21 und 30 g/m² und idealerweise zwischen 22 und 27 g/m² aufweist.

2. Mehrschichtige Struktur nach Anspruch 1, **dadurch gekennzeichnet, dass** die Trägerschicht eine Masse pro Fläche zwischen 200 und 800 g/m³, vorzugsweise zwischen 250 und 500 g/m³ und insbesondere zwischen 300 und 400 g/m³ aufweist.

3. Mehrschichtige Struktur nach Anspruch 1 oder 2, **dadurch gekennzeichnet, dass** die organischen Fasern mit mehrlappigem Querschnitt eine durchschnittliche längenbezogene Masse zwischen 1 und 25 dtex, vorzugsweise zwischen 3 und 15 dtex, insbesondere zwischen 5 und 12 dtex aufweisen.

4. Mehrschichtige Struktur nach einem der vorhergehenden Ansprüche, **dadurch gekennzeichnet, dass** die Fasern mit mehrlappigem Querschnitt wenigstens ein synthetisches, thermoplastisches, organisches Polymer enthalten.

5. Mehrschichtige Struktur nach einem der vorhergehenden Ansprüche, **dadurch gekennzeichnet, dass** die Fasern mit mehrlappigem Querschnitt Fasern mit dreilappigem, vierlappigem oder fünflappigem Querschnitt sind.

6. Mehrschichtige Struktur nach einem der vorhergehenden Ansprüche, **dadurch gekennzeichnet, dass** die Fasern mit mehrlappigem Querschnitt ein Modifikationsverhältnis (R/r) aufweisen, das zwischen 2 und 7, vorzugsweise zwischen 3 und 6 beträgt.

7. Mehrschichtige Struktur nach einem der vorhergehenden Ansprüche, **dadurch gekennzeichnet, dass** die Haftschicht (c) einen Schmelzhaftstoff mit einem Erweichungspunkt enthält, der wenigstens 10 °C, vorzugsweise wenigstens 15 °C und idealerweise wenigstens 20 °C niedriger ist als der Erweichungspunkt des die Trägerschicht (a) bildenden Polymers.

8. Mehrschichtige Struktur nach einem der vorhergehenden Ansprüche, **dadurch gekennzeichnet, dass** die Haftschicht (c) von einem Netz aus Punkten und/oder Linien gebildet ist, das sich homogen über die gesamte Grenzfläche zwischen den Schichten (a) und (b) erstreckt.

9. Mehrschichtige Struktur nach einem der vorhergehenden Ansprüche, **dadurch gekennzeichnet, dass** die Oberflächenschicht (b) ein Glasgewebe oder ein Glasfaservlies ist.

10. Mehrschichtige Struktur nach einem der vorhergehenden Ansprüche, **dadurch gekennzeichnet, dass** die Oberflächenschicht (b) eine Masse pro Fläche zwischen 80 und 450 g/m², vorzugsweise zwischen 100 und 300 g/m² und insbesondere zwischen 150 und 250 g/m² aufweist.

11. Mehrschichtige Struktur nach einem der vorhergehenden Ansprüche, **dadurch gekennzeichnet, dass** sie ferner eine Unterschicht (d) aufweist, die vorzugsweise wasserdampfdurchlässig ist und auf die Seite der Trägerschicht (a) geklebt ist, die der entgegengesetzt ist, die mit der Oberflächenschicht (b) in Kontakt ist.

12. Mehrschichtige Struktur nach einem der vorhergehenden Ansprüche, **dadurch gekennzeichnet, dass** sie ferner eine Oberschicht aus Lackfarbe (e) umfasst, die auf die Oberflächenschicht (b) aufgebracht ist.

13. Mehrschichtige Struktur nach einem der vorhergehenden Ansprüche, **dadurch gekennzeichnet, dass** sie eine Gesamtdicke zwischen 4,0 und 5,5 mm hat.

14. Verfahren zur Verbesserung des akustischen Komforts eines Zimmers oder eines Gebäudes, umfassend die Aufbringung einer Struktur nach einem der vorhergehenden Ansprüche, vorzugsweise durch Kleben, auf eine oder mehrere Innenwände des Zimmers oder des Gebäudes.

15. Verfahren zur Herstellung einer mehrschichtigen Struktur nach einem der Ansprüche 1 bis 13, **dadurch gekennzeichnet, dass** es das Übereinanderlegen eines Vlieses aus organischen Fasern mit mehrlappigem Querschnitt, eines Gewebes aus Schmelzhaftstoff und eines Glasgewebes und anschließend das Erhitzen der so gebildeten, wenigstens drei Schichten aufweisenden Struktur auf eine Temperatur, die wenigstens gleich dem Erweichungspunkt des Schmelzhaftstoffs ist, umfasst.

16. Verfahren zur Herstellung einer mehrschichtigen Struktur nach einem der Ansprüche 1 bis 13, **dadurch gekennzeichnet, dass** es das Aufbringen einer Haftzusammensetzung gemäß einem geordneten oder zufälligen Muster auf einem Vlies aus organischen Fasern mit mehrlappigem Querschnitt und/oder auf einem Glasgewebe, das Inkontaktbringen des Vlieses aus organischen Fasern mit dem Glasgewebe umfasst, um das Glasgewebe auf die Struktur aus organischem Polymerschaum zu kleben.

## Claims

1. A multilayer structure, having an overall thickness between 3.5 and 6 mm, comprising:
(a) a support layer made of a nonwoven based on organic fibers having a multilobal tranverse cross section,
(b) a surface layer formed by a glass textile, having a static air flow resistance, measured according to the standard ISO 9053, between 10⁵ N.s.m⁻⁴ and 10⁶ N.s.m⁻⁴, preferably between 5 × 10⁵ N.s.m⁻⁴ and 8.5 × 10⁵ N.s.m⁻⁴, in particular between 7 × 10⁵ N.s.m⁻⁴ and 8 × 10⁵ N.s.m⁻⁴,
(c) at the interface between the support layer (a) and the surface layer (b), a discontinuous adhesive layer having a surface density between 17 and 60 g/m², preferably between 20 and 40 g/m², in particular between 21 and 30 g/m², and ideally between 22 and 27 g/m².

2. The multilayer structure as claimed in claim 1, **characterized in that** the support layer has a surface density between 200 and 800 g/m², preferably between 250 and 500 g/m² and in particular between 300 and 400 g/m².

3. The multilayer structure as claimed in claim 1 or 2, **characterized in that** the organic fibers having a multilobal cross section have an average linear density between 1 and 25 dtex, preferably between 3 and 15 dtex, and in particular between 5 and 12 dtex.

4. The multilayer structure as claimed in one of the preceding claims, **characterized in that** the fibers having a multilobal cross section comprise at least one synthetic thermoplastic organic polymer.

5. The multilayer structure as claimed in one of the preceding claims, **characterized in that** the fibers having a multilobal cross section are fibers having a trilobal, tetralobal or pentalobal cross section.

6. The multilayer structure as claimed in one of the preceding claims, **characterized in that** the fibers having a multilobal cross section have a modification ratio (R/r) between 2 and 7, preferably between 3 and 6.

7. The multilayer structure as claimed in any one of the preceding claims, **characterized in that** the adhesive layer (c) comprises a hot-melt adhesive having a softening point at least 10°C, preferably at least 15°C and ideally at least 20°C below the softening point of the polymer forming the support layer (a).

8. The multilayer structure as claimed in any one of the preceding claims, **characterized in that** the adhesive layer (c) consists of a network of points and/or lines extending homogeneously over the entire interface between the layers (a) and (b).

9. The multilayer structure as claimed in any one of the preceding claims, **characterized in that** the surface layer (b) is a glass cloth or a nonwoven of glass fibers.

10. The multilayer structure as claimed in any one of the preceding claims, **characterized in that** the surface layer (b) has a surface density between 80 and 450 g/m², preferably between 100 and 300 g/m² and in particular between 150 and 250 g/m².

11. The multilayer structure as claimed in any one of the preceding claims, **characterized in that** it further comprises an underlayer (d), preferably permeable to water vapor, adhesively bonded to the face of the support layer (a) opposite the face in contact with the surface layer (b).

12. The multilayer structure as claimed in any one of the preceding claims, **characterized in that** it further comprises a paint overlayer (e) applied to the surface layer (b).

13. The multilayer structure as claimed in any one of the preceding claims, **characterized in that** it has an overall thickness between 4.0 and 5.5 mm.

14. A process for improving the acoustic comfort of a room or of a building, comprising the application of a structure as claimed in any one of the preceding claims, preferably by adhesive bonding, to one or more internal walls of said room or of said building.

15. A process for manufacturing a multilayer structure as claimed in any one of claims 1 to 13, **characterized in that in that** it comprises the superposition of a nonwoven of organic fibers having a multilobal cross section, of a web of hot-melt adhesive and of a glass textile, then the heating of the structure comprising at least three layers thus formed to a temperature at least equal to the softening point of the hot-melt adhesive.

16. A process for manufacturing a multilayer structure as claimed in any one of claims 1 to 13, **characterized in that** it comprises the application of an adhesive composition in an ordered or random pattern to a nonwoven of organic fibers having a multilobal cross section and/or to a glass textile, the contacting of the nonwoven of organic polymer fibers with the glass textile, so as to adhesively bond the glass textile to the organic polymer foam structure.
